# FASCICULE DE BREVET EUROPEEN

(11) **EP 2 861 893 B1**
(45) Date de publication et mention de la délivrance du brevet: **04.07.2018**
(21) Numéro de dépôt: 13725415.7
(22) Date de dépôt: 03.05.2013
(51) Int. Cl.: F16H 61/06

(54) **PROCEDE DE PILOTAGE D'UN SYSTEME HYDRAULIQUE, ET SYSTEME HYDRAULIQUE ASSOCIE**
VERFAHREN ZUR STEUERUNG EINES HYDRAULIKSYSTEMS UND DERARTIGES HYDRAULIKSYSTEM
METHOD FOR CONTROLLING A HYDRAULIC SYSTEM AND RELATED HYDRAULIC SYSTEM

(30) Priorité: 31.05.2012 FR 1255035
(43) Date de publication de la demande: 22.04.2015
(73) Titulaire: Renault S.A.S., 92100 Boulogne-Billancourt (FR)
(72) Inventeur: COUTEL, Julien, F-59790 Ronchin (FR)
(74) Mandataire: Renou, Jean-François
(86) Numéro de dépôt international: PCT/FR2013/050985
(87) Numéro de publication internationale: WO 2013/178900

(56) Documents cités:
- EP-A2- 1 840 416
- US-A- 3 321 056
- US-A- 4 274 308
- US-A- 5 133 230
- US-A- 5 899 831

## Description

L'invention a pour objet le pilotage d'un système hydraulique, notamment intégré dans une boîte de vitesses automatique à rapport discret, en particulier une boîte automatique comportant des récepteurs à commande hydraulique, voir par exemple la demande de brevet FR-A-2689595. Dans ces boîtes de vitesses, pour chaque vitesse engagée, un ou plusieurs récepteurs, c'est-à-dire un ou plusieurs embrayages ou freins, sont serrés, par exemple pour solidariser entre eux des éléments d'un train épicycloïdal, ou pour solidariser un élément du train épicycloïdal avec un carter de la boîte de vitesses, de manière à obtenir le rapport de démultiplication souhaité.

Lors d'un changement de rapport de vitesse, certains récepteurs peuvent être maintenus serrés, mais au moins un second récepteur est progressivement ouvert pendant qu'un premier récepteur est progressivement fermé.

La manière dont se croisent la courbe de couple transmissible du second récepteur et la courbe de couple transmissible du premier récepteur se répercute sur le couple finalement transmis entre l'arbre d'entrée et l'arbre de sortie de la boîte.

Le serrage du premier récepteur comporte une première étape de rattrapage des jeux du récepteur, qui ne permet pas d'atteindre le serrage nécessaire à transmettre du couple. Puis la mise en compression d'éléments de friction provoque une augmentation soudaine du couple transmis, qui peut provoquer un à-coup de couple ressenti par les passagers du véhicule.

La demande de brevet FR 2 689 595 propose ainsi d'alimenter un récepteur avec une vanne mécanique autorisant soit l'alimentation par un gicleur de faible calibration, soit l'alimentation du récepteur par un gicleur de forte calibration.

En jouant sur la calibration du gicleur, on peut ainsi ralentir la montée en pression du récepteur.

On débute alors la fermeture du récepteur par une phase de remplissage rapide, suivie d'une phase de remplissage plus lente, utilisant le gicleur de faible calibration, et utilisant simultanément un absorbeur de débit également raccordé au récepteur.

Cette solution peut être proposée sur les boîtes de vitesses en cours de conception, mais est plus difficilement applicable pour corriger un manque de progressivité sur une boîte de vitesses existante.

En outre, la courbe de reprise de couple du premier récepteur est peu modulable, puisque l'on peut uniquement jouer sur le moment de basculement entre les positions correspondant à l'un ou l'autre gicleur.

La demande de brevet FR 2 570 458 décrit également un dispositif de commande d'une transmission automatique à récepteur hydraulique, dans laquelle, lors d'un passage de vitesses, l'alimentation du ou des récepteurs actifs se fait successivement par un orifice à grande section de passage, pour permettre un remplissage rapide, puis par un orifice à faible section de passage pour permettre la progressivité, puis à nouveau par un orifice à grande section de passage pour assurer le verrouillage du récepteur.

Le circuit hydraulique est alimenté à une première valeur de pression de ligne en marche arrière, en position neutre et en position de parcage, et est alimenté à une deuxième valeur de pression de ligne pour tous les rapports de marche avant.

De même que précédemment, cette configuration n'est applicable que sur des boîtes de vitesses conçues dès l'origine avec les gicleurs adaptés pour l'alimentation des récepteurs avec différents débits. Cette configuration reste limitée en termes de marge de manoeuvre de régulation de la progressivité de la montée en pression du premier récepteur.

L'invention a pour but de proposer un dispositif de commande d'une transmission automatique à récepteur hydraulique, qui peut être adapté, moyennant des modifications matérielles mineures voire nulles, sur des boîtes de vitesses existantes, et qui permet de réguler en temps réel la progressivité de la reprise de couple de la boîte.

A cette fin, l'invention propose un système hydraulique, notamment pour transmission automatique de véhicule automobile, comportant des récepteurs hydrauliques de type embrayage et/ou freins, alimentés à la même pression de ligne par un même réseau hydraulique. Le système comporte une unité de commande électronique configurée pour provoquer une chute temporaire de la pression de ligne pendant l'opération de fermeture de l'un des récepteurs lors d'un changement d'état du système, notamment lors d'un changement de rapport de démultiplication d'un premier rapport à un second rapport. Le premier récepteur est alimenté par une première vanne de séquence et comporte un accumulateur de pression connecté en aval de la première vanne de séquence parallèlement au premier récepteur. L'unité de commande est configurée pour déclencher un remplissage de l'accumulateur pendant l'opération de fermeture du premier récepteur, de manière à distribuer le fluide issu de la première vanne de séquence entre l'accumulateur de pression et le premier récepteur, et à ralentir la montée en pression du premier récepteur. Le système hydraulique peut par exemple faire partie d'une boîte de vitesses automatique pour véhicule automobile. Le système hydraulique peut comporter un second récepteur associé à un premier rapport de vitesse de la boîte et alimenté par une seconde vanne de séquence, et peut comporter un premier récepteur associé à un second rapport de vitesses et alimenté par une première vanne de séquence. L'unité de commande électronique peut être configurée pour, lors du changement de rapport, basculer l'état de la première vanne de séquence de manière à fermer le premier récepteur, et pour actionner une troisième vanne apte à provoquer la chute temporaire de la pression de ligne. La chute de pression a lieu pendant l'opération de fermeture du premier récepteur. On entend par là que la chute de pression de ligne a lieu sur un intervalle de temps qui est compris entre :
- le début de l'ouverture de la première vanne de séquence, et
- une phase de verrouillage du premier récepteur.

Par phase de verrouillage, on entend l'instant où la pression dans un piston actionnant le récepteur atteint sa valeur maximale durant le processus de fermeture du récepteur.

De manière préférentielle, la chute de pression débute sensiblement au moment où le premier récepteur commence à transmettre du couple vers l'arbre de sortie, et se termine sensiblement quand le premier récepteur est apte à transmettre tout le couple qu'il doit transmettre après le changement de rapport en cours.

On considère que la première et/ou la seconde vanne de séquence sont ouvertes quand elles alimentent en pression leurs récepteurs associés. Selon un mode de réalisation préféré, la boîte peut comporter cinq récepteurs, soit trois embrayages et deux freins, permettant de contrôler un ou plusieurs trains d'engrenages épicycloïdaux. Chaque rapport de démultiplication pouvant être engagé sur la boîte, aussi appelé rapport de vitesse, peut être associé à un ou à plusieurs récepteurs, par exemple à deux récepteurs.

On entend par embrayage un dispositif permettant de solidariser deux éléments rotatifs entre eux, et par frein un dispositif permettant de solidariser un élément rotatif par rapport au carter de la boîte de vitesses. Selon un mode de réalisation préféré, la chute de pression de ligne peut être appliquée lors d'un changement de rapport sous charge de la première vitesse de marche avant de la boîte à la seconde vitesse de marche avant de la boîte. Lors d'un changement de rapport de la première vitesse vers la seconde vitesse de marche avant de la boîte, un premier embrayage peut être vidangé pendant qu'un second embrayage peut être mis sous pression, et un frein peut être maintenu fermé pendant le changement de rapport, frein qui était déjà fermé quand la première vitesse était engagée.

Selon un mode de réalisation avantageux, l'unité de commande électronique est configurée pour amener la pression de ligne, d'une valeur nominale appliquée avant le début du changement de rapport, à une valeur minimale atteinte pendant la phase de remplissage de l'accumulateur de pression, et est configurée pour ensuite ré-augmenter progressivement la pression de ligne jusqu'à ce que celle-ci atteigne à nouveau, avant la fin du remplissage de l'accumulateur de pression, la valeur nominale.

Selon un mode de réalisation préféré, l'unité de commande électronique est configurée pour déclencher le remplissage de l'accumulateur à un instant postérieur à une ouverture de la première vanne de séquence, et pour déclencher le remplissage de l'accumulateur de préférence sensiblement au même moment où l'unité de commande déclenche une fermeture de la seconde vanne de séquence.

De manière préférentielle, l'unité de commande est configurée pour, pendant le changement de rapport, provoquer une vidange d'un second récepteur de manière à ouvrir le second récepteur, et est configurée pour provoquer une chute de pression de ligne, de la valeur nominale vers la valeur minimale, de manière à ce que le début de la chute de pression ait lieu au plus tôt en même temps, et de préférence après, le début de la vidange du second récepteur. La vidange du second récepteur peut être déclenchée au cours du remplissage de l'accumulateur et du premier récepteur, et être accélérée pendant la reprise du couple du premier récepteur, par exemple quand une inflexion d'une courbe de régime de rotation d'une turbine est détectée.

Selon un mode de réalisation avantageux, l'unité de commande est configurée pour provoquer une chute de pression de ligne, de la valeur nominale vers la valeur minimale, de manière à ce que la valeur minimale de pression soit atteinte au plus tard en même temps que le premier récepteur commence à transmettre du couple.

L'unité de commande électronique peut par exemple être configurée pour imposer un profil de remontée de la pression de ligne vers sa valeur nominale, en fonction de variables comprenant notamment une vitesse de rotation d'une turbine de convertisseur de couple, un couple délivré par la turbine et une température d'huile du système hydraulique. On considère que la pression de ligne est pilotée en fonction des variables citées si elle est pilotée en fonction de ces variables, ou en fonction de variables proportionnelles à ces variables, ou en fonction de variables permettant de calculer les variables citées.

Selon un mode de réalisation préféré, le système hydraulique comprend une électrovanne de modulation apte à provoquer la chute de pression de ligne pendant le changement de rapport. L'électrovanne de modulation peut délivrer une pression modulée de commande à une vanne de régulation de pression. La vanne de régulation de pression peut délivrer au réseau une pression différentielle ou pression de ligne sensiblement proportionnelle à la pression modulée de commande, à partir de l'énergie hydraulique assurée par une pompe. L'électrovanne de modulation pourrait être remplacée par une électrovanne proportionnelle pilotant elle-même la vanne de régulation de pression. Cette solution est cependant plus onéreuse. Par électrovanne de modulation, on entend une vanne apte à hacher en tout ou rien un débit hydraulique dans le temps en fonction d'un signal électrique qu'elle reçoit, de manière à établir une pression hydraulique variable en aval de la vanne de modulation. Par électrovanne proportionnelle, on entend une électrovanne apte à assurer un passage hydraulique de section variable en fonction d'un signal électrique qu'elle reçoit, de manière à établir une pression hydraulique variable en aval de l'électrovanne proportionnelle. Selon un mode de réalisation préféré, la première et la seconde vanne de séquence sont des électrovannes de séquence. Des structures d'électrovannes de séquence, d'électrovannes de modulation, d'électrovannes proportionnelles et de vannes de régulation sont connues. La pression de fluide alimentant l'électrovanne de modulation peut elle-même être régulée par une vanne amont de régulation de pression, permettant de délivrer à l'électrovanne de modulation une pression constante inférieure à la pression de ligne. La vanne amont de régulation peut également alimenter en pression de commande les extrémités des électrovannes de séquence, de manière à fournir la force motrice nécessaire au déplacement des tiroirs des électrovannes de séquence. Les électrovannes de séquence peuvent alors être actionnées en provoquent par un actionneur électrique une fuite à l'une ou l'autre des extrémités du tiroir, de manière à ce que le tiroir soit déplacé sous l'effet de la pression appliquée à l'extrémité opposée.

Avantageusement, le système comprend en outre une quatrième vanne de séquence pouvant -du fait des connexion hydrauliques existantes- être interposée entre le second récepteur et la bâche, et pouvant se placer dans une première position permettant une première vitesse de vidange du récepteur par un premier orifice, et dans une seconde position permettant une seconde vitesse de vidange du récepteur plus lente que la première, par un second orifice de section plus réduite. Selon un mode de réalisation avantageux, l'étape de vidange de second récepteur est déclenchée en plaçant d'abord la quatrième vanne dans la seconde position, puis dans la première position.

Selon un autre aspect, l'invention propose un procédé de gestion d'un système hydraulique, notamment d'un système hydraulique pour transmission automobile. Le système hydraulique comprend au moins un premier et un second récepteur hydrauliques alimentés en pression à partir d'une pression de ligne d'un circuit hydraulique, chacun par au moins une vanne de séquence. Pendant la montée en pression du premier récepteur au cours d'un changement de rapport de vitesses, on provoque une baisse temporaire de la pression de ligne.

Selon une chronologie préférentielle du procédé, on ouvre une vanne de séquence apte à alimenter simultanément le premier récepteur et un accumulateur de pression, puis on autorise le remplissage de l'accumulateur de pression et on déclenche la vidange du second récepteur, puis on fait baisser la pression de ligne, puis on ramène, avant la fin du remplissage de l'accumulateur de pression, la pression de ligne sensiblement à sa valeur initiale.

D'autres buts, caractéristiques et avantages de l'invention apparaîtront à la lecture de la description suivante, donnée uniquement à titre d'exemple non limitatif, et faite en référence aux dessins annexés sur lesquels :
- la figure 1 est une représentation schématique d'un système hydraulique de boîte de vitesses selon l'invention ;
- la figure 2 illustre l'évolution dans le temps de certaines variables remarquables de la boîte de vitesses de la figure 1, pendant un changement de rapport effectué conformément à l'invention.

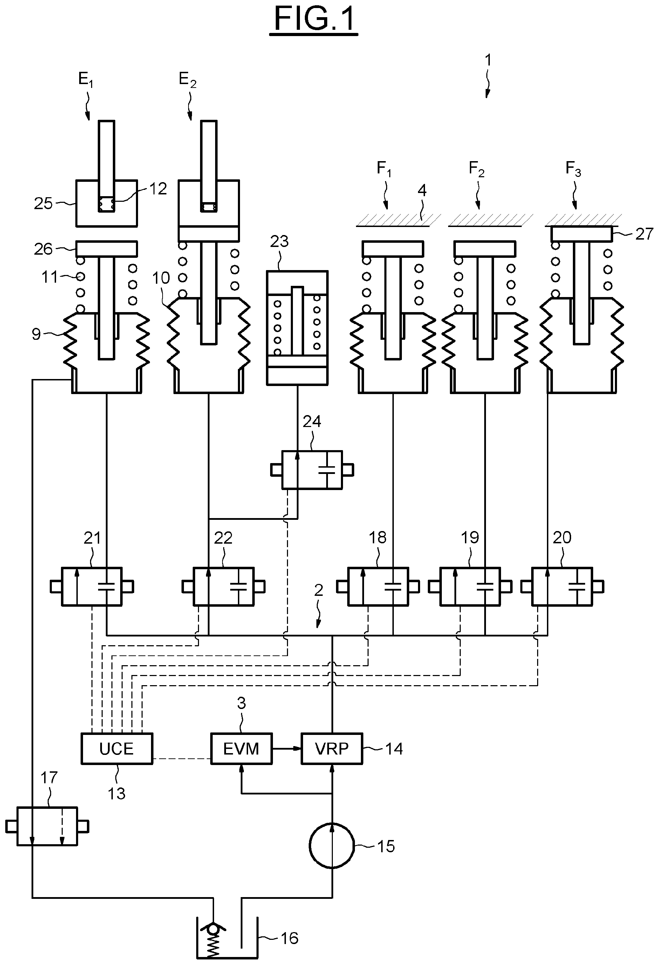

Tel qu'illustré sur la figure 1, un système hydraulique 1 de boîte de vitesses automatique comprend un ensemble de récepteurs E₁, E₂, F₁, F₂, F₃ correspondant par exemple à un premier embrayage, un second embrayage, un premier frein, un deuxième frein, un troisième frein.

Chaque embrayage E₁ et E₂ peut par exemple permettre de solidariser deux éléments mobiles, par exemple rotatifs, de la boîte de vitesses, par exemple deux éléments d'un train d'engrenage épicycloïdal. Chacun des freins F₁, F₂, F₃ peut par exemple permettre de solidariser un élément mobile de la boîte de vitesses 1, par exemple des éléments d'un train d'engrenages épicycloïdal, avec un carter fixe 4 de la boîte de vitesses 1. L'embrayage E1 peut ainsi solidariser un élément mobile 25 avec un élément mobile 26, et le frein F3 peut solidariser un élément mobile 27, avec le carter 4 de la boîte 1. Le train d'engrenage épicycloïdal permet de transmettre à un arbre de sortie de la boîte de vitesses (non représenté), un mouvement de rotation et un couple, obtenus par démultiplication d'un mouvement de rotation et d'un couple arrivant au train épicycloïdal d'une turbine de convertisseur de couple hydraulique (non représentée) située en entrée de la boîte. Le convertisseur de couple hydraulique permet d'ajouter un niveau de démultiplication supplémentaire avant le train épicycloïdal, et permet de jouer le rôle d'un filtre torsionnel entre le moteur auquel est reliée la boîte de vitesses, et les roues du véhicule.

Chacun des récepteurs E₁, E₂, F₁, F₂, F₃ est actionné par un piston hydraulique repéré par exemple par la référence 9 pour l'embrayage E₁ et par la référence 10 pour l'embrayage E₂.

Le piston peut mettre en pression l'un contre l'autre deux éléments, par exemple 25, 26, de la boîte de vitesses, sous l'effet d'une pression hydraulique lui parvenant au travers d'une électrovanne de séquence.

Le premier embrayage E₁ est ainsi commandé au travers d'une électrovanne de séquence 21 permettant d'actionner le piston 9, le second embrayage E₂ est actionné au travers d'une électrovanne de séquence 22 permettant d'actionner le piston 10, les freins F₁, F₂, F₃ sont actionnés respectivement au travers d'électrovannes de séquence 18, 19 et 20.

Ces électrovannes de séquence permettent de transférer vers les pistons une pression de ligne P_{ligne} distribuée par un réseau hydraulique 2 alimenté par une pompe 15. Chaque récepteur peut être vidangé pour faire chuter sa pression hydraulique, en renvoyant le fluide hydraulique issu du circuit 2 vers une bâche 16 à pression nulle.

Lors de la mise sous pression d'un piston, par exemple du piston 9, celui-ci se déplace de manière à venir appuyer l'un contre l'autre deux éléments, par exemple 25, 26 du récepteur.

La montée en pression à l'interface des deux éléments, par exemple 25, 26 dépend à la fois de l'historique de montée en pression du piston, et d'un historique de rattrapage de jeu et de mise en compression d'éléments élastiques 11, 12 du récepteur.

Afin de pouvoir rendre plus progressive la montée en pression à l'interface des éléments mobiles, un accumulateur de pression 23 est disposé dans le circuit hydraulique 2, de manière à pouvoir être connecté en parallèle à au moins l'un des récepteurs, par exemple E2, pendant le remplissage de celui-ci, en aval de l'électrovanne associée, par exemple l'électrovanne 22.

Les connexions hydrauliques de la figure 1 sont représentées de manière schématique simplifiée, et en particulier tous les retours hydrauliques vers la bâche 16 ne sont pas représentés.

Les récepteurs E₁, E₂, F₁, F₂, F₃ peuvent être connectés de manière à pouvoir être délestés de la pression hydraulique par un retour à la bâche 16 qui peut transiter par une vanne de progressivité 17. La vanne de progressivité 17 est une électrovanne de séquence qui peut être positionnée soit sur une position de vidange par un premier orifice de petit diamètre, soit sur une position de vidange par un second orifice de plus grand diamètre que le premier orifice.

Dans l'exemple illustré sur la figure 1, au moins le premier embrayage E₁ est ainsi connecté à la bâche 16 par un circuit transitant par la vanne de progressivité 17. Le remplissage de l'accumulateur de pression 23 peut être autorisé ou peut être interdit au moyen d'une électrovanne de séquence 24. La pression de ligne du circuit hydraulique 2 peut être imposée au moyen d'une vanne de régulation de pression 14, créant une pression différentielle par rapport à la pression délivrée par la pompe 15, la vanne de régulation de pression 14 étant elle même commandée par une pression de commande arrivant d'une électrovanne de modulation 3.

L'électrovanne de modulation 3 est une électrovanne apte à créer à son aval une pression de commande, obtenue grâce à des séquences rapides d'ouverture et de fermeture de la vanne en tout ou rien, créant ainsi un « hachage » de la pression transitant par la vanne 3.

La pression de fluide alimentant l'électrovanne de modulation 3 peut elle-même être régulée par une vanne amont de régulation de pression (non représentée), permettant de délivrer à l'électrovanne de modulation une pression constante inférieure à la pression de ligne. La vanne amont de régulation peut également alimenter en pression les extrémités des électrovannes de séquences 18, 19, 20, 21, 22, 24, de manière à fournir la force motrice nécessaire au déplacement des tiroirs de ces électrovannes de séquences.

Les électrovannes de séquences peuvent par exemple être actionnées en provoquant, à l'aide d'un actionneur électromagnétique, une fuite hydraulique à l'une ou à l'autre extrémité d'un tiroir de l'électrovanne de séquence, de manière à ce que le tiroir soit déplacé sous l'effet de la pression appliquée sur l'extrémité opposée du tiroir.

Une unité de commande électronique 13 est connectée à chacune des électrovannes de séquences 17, 18, 19, 20, 21, 22, 24, et à l'électrovanne de modulation 3.

L'unité de commande électronique 13 reçoit d'un calculateur, associé à des capteurs de vitesse, des informations concernant la vitesse de rotation du moteur et la vitesse de rotation de l'arbre d'entrée de la boîte. Ces informations de vitesse permettent d'estimer le couple transmis à l'arbre d'entrée par l'intermédiaire du convertisseur de couple lié hydrauliquement cet arbre d'entrée (non représentés). C'est la différence de vitesse entre le moteur et l'arbre d'entrée, appelée glissement, qui engendre la multiplication de couple dans le convertisseur de couple.

L'unité de commande électronique 13 émet vers les différentes vannes des signaux de commande. Ces signaux de commande permettent notamment de modifier la pression de ligne du circuit 2, pression régulée par l'électrovanne de modulation 3. Ils permettent également de serrer et/ou de desserrer les récepteurs E₁, E₂, F₁, F₂, F₃, adéquats pour mettre la boîte de vitesses dans une configuration correspondant à un rapport de transmission souhaité.

Afin de simplifier la figure 1, l'alimentation des récepteurs E₁, E₂, F₁, F₂, F₃ a été résumée à une alimentation « on-off » par les électrovannes de séquences 18, 19, 20, 21, 22. En pratique, lorsque une de ces électrovannes de séquence empêche l'alimentation de son récepteur associé par la pression de ligne du circuit hydraulique 2, l'unité de commande électronique 13 autorise en même temps une mise à la bâche du même récepteur, éventuellement par l'intermédiaire de la vanne de progressivité 1, par une connexion hydraulique qui n'a été représentée que pour le récepteur E1.

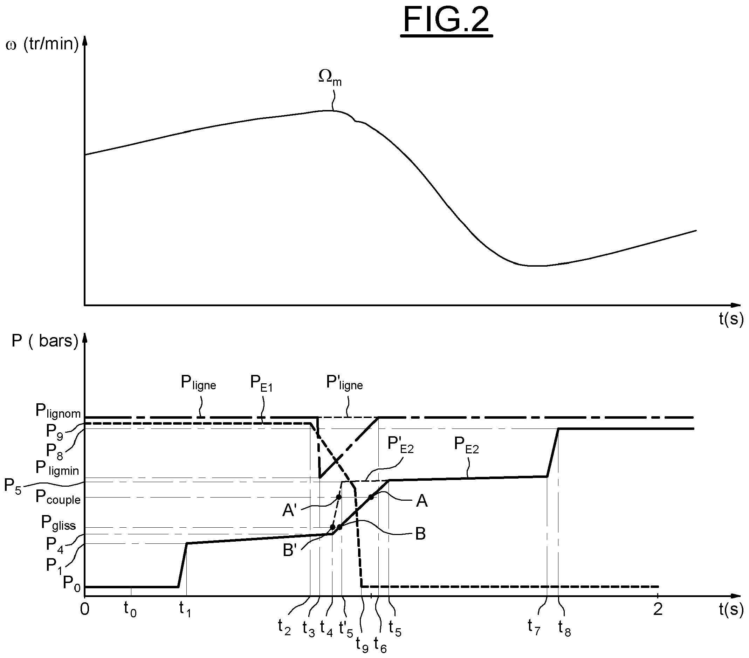

La figure 2 illustre les courbes en fonction du temps de quelques valeurs remarquables de fonctionnement de la boîte de vitesses de la figure 1, pendant un changement de rapport montant sous charge, d'une première vitesse de marche avant de la boîte à une seconde vitesse de marche avant de la boîte.

Est également représentée sur la figure 2, à titre indicatif, une courbe d'évolution du régime de rotation de l'arbre d'entrée de la boîte.

La figure 2 illustre ainsi une première courbe Ωₘ indiquant l'évolution de la vitesse de rotation d'une turbine d'un convertisseur de couple hydraulique placé en entrée de la boîte.

Un second groupe de courbes transcrivent des variations de pression en fonction du temps, sur la même échelle de temps. Une courbe P_{ligne} (ou P'ligne) indique ainsi les variations de la pression de ligne, par exemple en bars, pendant le changement de rapport. Une courbe P_{E1} indique les variations de pression à l'interface de couplage du récepteur E₁. Par « interface de couplage » on entend par exemple l'interface entre des surfaces de frottement aptes, sous l'effet de la pression hydraulique du piston 9, à venir en contact l'une avec l'autre pour transmettre le couple transitant par le récepteur E₁. La pression P_{E1} peut par exemple être mesurée au moyen d'un capteur de pression placé à l'intérieur du piston 9.

Une courbe P_{E2} représente les variations de pression entre des éléments d'interface du premier récepteur E₂. La pression P_{E2} peut par exemple être mesurée au moyen d'un capteur de pression placé à l'intérieur du piston 10.

Une courbe en pointillés P'_{E2} indique les variations de pression entre ces mêmes éléments d'interface du premier récepteur E₂ dans une boîte de vitesses commandée suivant une procédure connue de l'art antérieur. Cette courbe P'_{E2} se superpose en grande partie avec la courbe P_{E2}, sauf en partie centrale des deux courbes.

Comme visible sur la figure 2, le principe du pilotage du changement de rapport consiste à faire décroître la pression de serrage P_{E1} du second récepteur, d'une valeur initiale P₉ correspondant à sa valeur de verrouillage, vers une valeur nulle atteinte à un instant t₉. Dans le même temps, l'unité de commande électronique 13 pilote les différentes vannes de manière à faire augmenter la pression de serrage P_{E2} (ou P'_{E2}) d'une valeur nulle, à une valeur de pression de serrage P₈.

Après le croisement des deux courbes de pressions de serrage du second récepteur E₁ et du premier récepteur E₂, le régime moteur, est progressivement réduit de manière à rejoindre une courbe de régime compatible avec la vitesse de rotation de l'arbre de sortie, lié aux roues du véhicule. Le régime Ωₘ de rotation de la turbine décroît en conséquence.

De manière idéale, pendant le transfert de couple du récepteur E₁ vers le récepteur E₂, le couple total disponible sur l'arbre de sortie de la boîte, après être passé par un minimum, devrait suivre une courbe qui croît vers un couple cible dépendant de la vitesse de rotation des roues du véhicule, cette croissance étant continue et suffisamment régulière pour ne pas créer de sensation d'inconfort pour les passagers du véhicule.

Les courbes P_{E1}, P'_{E2} et P'_{ligne} illustrent un exemple de changement de rapport tel que pratiqué sur des boîtes de vitesses connues, ayant par exemple une structure similaire à celle décrite sur la figure 1.

La pression de ligne P'_{ligne} est maintenue sensiblement constante et fonction du couple à la roue demandé par le conducteur. A un instant t₀, un signal de début de fermeture du premier récepteur E₂ est envoyé par l'unité de commande 13. Celle-ci envoie par exemple un signal à l'électrovanne de séquence 22 qui bascule en position ouverte, et autorise ainsi l'écoulement du fluide à la pression de ligne P_{ligne}, du circuit hydraulique 2 vers le piston 10 du récepteur E₂. La pression d'interface du récepteur E₂ augmente alors rapidement jusqu'à une première pression P₁ qu'elle atteint à un instant t₁. Entre l'instant t₁ et un instant t₄, la pression d'interface du récepteur E₂ augmente plus lentement que pendant la rampe de pression précédant l'instant t₁, jusqu'à atteindre une pression P₄ à l'instant t₄.

Cette augmentation plus lente sur l'intervalle t₁-t₄ correspond à une phase de rattrapage de jeu et à la compression de certains éléments élastiques faisant partie du récepteur E₂, tel que par exemple le ressort de compression 12. A un instant t₂, compris entre t₁ et t₃, l'unité de commande électronique 13 envoie un signal vers une électrovanne de séquence 24 située en amont de l'accumulateur de pression 23 de manière à autoriser le remplissage de l'accumulateur de pression 23. A partir de cet instant t₂, le fluide traversant l'électrovanne de séquence 22 se répartit donc entre le récepteur E₂ et l'accumulateur de pression 23.

La montée en pression du récepteur E₂ se trouve donc ralentie. A l'instant t₄, quand les jeux du récepteur E₂ ont été rattrapés, la pente, par rapport au temps, de variation de pression d'interface du récepteur E₂ augmente, jusqu'à un instant t'₅ où la pression d'interface P'_{E2} du récepteur E₂ atteint une valeur P₅ correspondant sensiblement à la pression d'équilibre imposée pendant le remplissage de l'accumulateur. L'accumulateur de pression 23 continue alors à se remplir. Quand l'accumulateur 23 est plein, à l'instant t₇, la pression P_{ligne} se trouve répercutée presque intégralement au niveau de la pression d'interface du récepteur E₂. On assiste à une dernière augmentation rapide de la pression d'interface P'_{E2} entre l'instant t₇ et un instant t₈, où cette pression P'_{E2} atteint une pression maximale P₈ qui est supérieure ou égale à la pression de verrouillage du récepteur E₂.

Pendant la montée en pression P'_{E2} des éléments d'interface du récepteur E₂ entre les instants t₄ et t'₅, la pression d'interface franchit successivement une première valeur P_{gliss} et une seconde valeur de pression P_{couple} correspondant respectivement à une pression où le récepteur E₂ commence à transmettre du couple et à une pression où le récepteur E₂ transmet l'intégralité du couple qui lui est appliqué. Les points de la courbe P'_{E2} correspondant au début de la transmission de couple et à l'instant où le récepteur atteint sa capacité totale de transmission de couple sont désignés respectivement par les points A' et B'.

La progressivité de la reprise de couple par le premier récepteur E₂ dépend donc de la pente de la courbe de pression d'interface du récepteur E₂ entre les pressions P_{gliss} et P_{couple}. La progressivité pourra être d'autant meilleure que la pente de la portion de courbe comprise entre les pressions P₄ et P₅ peut être amenée à des valeurs modérées.

A l'instant t₃ correspondant sensiblement l'instant t₂ et antérieur à l'instant t₄, l'unité de commande électronique 13 envoie un signal à l'électrovanne de séquence 21 pour basculer celle-ci en position fermée, et arrêter son alimentation par la pression de ligne P_{ligne} arrivant du circuit hydraulique 2.

En même temps, l'unité de commande électronique 13 envoie un signal à l'électrovanne de séquence 17 pour autoriser la vidange du récepteur E₁ au travers de l'orifice de section réduite de l'électrovanne de séquence 17.

La pression P_{E1} d'interface du récepteur E₁ décroît alors jusqu'à un instant tₜᵣₐₙₛ postérieur à l'instant t₄. L'unité de commande électronique envoie alors un autre signal à l'électrovanne de séquence 17, provoquant alors la vidange de récepteur E₁ par l'orifice de grande section de l'électrovanne 17.

La chute de pression d'interface du second récepteur E₁ s'accélère alors jusqu'à atteindre une valeur nulle.

L'instant tₜᵣₐₙₛ peut par exemple être choisi de manière à correspondre sensiblement à l'instant t'₅.

L'unité de commande électronique 13 peut par exemple être configurée pour déclencher la vidange rapide du récepteur E₁ quand une inflexion du régime de rotation de la turbine du convertisseur de couple de la boîte est détectée. Cette inflexion est provoquée par la reprise du couple transmis par le premier récepteur E₂.

Du fait de la croissance rapide de la pression d'interface de E₂ entre les instants t₄ et t'₅, le croisement des courbes P_{E1} et P'_{E2} se fait en général en dehors de l'intervalle de pression P_{gliss} et P_{couple}.

Autrement dit, le récepteur E₁ continue à transmettre du couple alors que le récepteur E₂ est déjà engagé. Cela provoque un à-coup de couple qui peut être ressenti de manière désagréable par les occupants du véhicule.

Les courbes P_{E1}, P_{E2} et P_{ligne} illustrent un exemple de changement de rapport tel que pratiqué sur la boîte de vitesses selon l'invention illustrée en figure 1, suivant un procédé conforme à l'invention.

Afin de rendre plus progressive la montée de pression du récepteur E₂ entre les pressions P_{gliss} et P_{couple}, l'unité de commande électronique 13 selon l'invention pilote l'électrovanne de modulation 3 de manière à créer une chute temporaire de la pression de ligne P_{ligne} sur un intervalle de temps t₃-t₆, l'instant t₃ précédant par exemple l'instant t₄ de fin de rattrapage de jeux de la courbe de pression d'interface du récepteur E₂, ou coïncidant sensiblement avec celui-ci.

Du fait de cette chute temporaire de pression de ligne, la pente de montée en pression d'interface du récepteur E₂ est plus faible que dans le mode de pilotage décrit en référence à la courbe P'_{E2}. La pression d'interface du récepteur E₂ atteint alors la pression P5 à un instant t₅ postérieur à l'instant t'₅.

De cette manière, les courbes P_{E1} et P_{E2} peuvent se croiser sur l'intervalle de pression P_{gliss} et P_{couple}. La reprise de couple par le premier récepteur E₂ est plus progressive, et permet à l'unité de commande de provoquer la vidange rapide du récepteur E₁ avant que le premier récepteur E₂ soit arrivé à sa pression P_{couple} de transmission totale du couple. Les passagers du véhicule ressentent alors moins la reprise de couple par le premier récepteur E₂. Les points de la courbe P_{E2} correspondant au début de la transmission de couple et à l'instant où le récepteur atteint sa capacité totale de transmission de couple sont désignés respectivement par les points A et B. Quand on utilise le mode de pilotage du système hydraulique selon l'invention, les courbes P_{E1} et P_{E2} peuvent se croiser entre les points A et B, ce qui est un des critères recherché pour obtenir un passage de rapport sans à coup de couple.

La chute de pression de ligne peut par exemple être déclenchée à un instant t₃, proche de t₄, lui-même déterminé par des essais préalables sur banc ou sur véhicule. De préférence, t₃ est légèrement postérieur à l'instant t₂ où l'unité de commande électronique 13 envoie le premier signal de vidange du récepteur E₁, de manière à ne pas perturber le déclenchement de la vidange du récepteur E₁.

Même si la courbe P_{ligne} représentée en figure 2 montre une chute de pression de ligne autorisée quasi instantané -jusqu'à une pression minimale de chute P_{ligmin}-, l'inertie du système hydraulique est telle qu'en pratique la pression de ligne se fait assez progressivement. A partir de la pression minimale atteinte P_{ligmin}, l'unité de commande électronique 13 pilote la remontée en pression jusqu'à atteindre la valeur initiale P_{lignom} de la pression de ligne. La remontée en pression de la pression d'interface P_{E2} se faisant, même si plus lentement, en dépit de la chute de pression de ligne, on choisit de préférence la durée de la chute de pression, donc l'instant t₆, de manière à ce que celui-ci coïncide sensiblement avec l'instant où la pression d'interface P_{E2}, atteint la pression P_{couple} pour laquelle le récepteur E₂ transmet tout le couple arrivant à l'entrée de la boîte de vitesses. La remontée de la pression de ligne permet ainsi de moduler plus efficacement la courbe de reprise de couple du récepteur E₂.

Pendant un changement de rapport de la première vitesse vers la seconde vitesse, et qui dure sensiblement de 2 à 3 secondes, la chute de pression peut typiquement durer (intervalle de temps t₃-t₆) de 0,1 à 0,5 secondes, et de préférence entre 0,15 et 0,3 secondes, et présenter une amplitude (amplitude de pression P_{ligmin} -P_{lignom}) comprise entre 0,2 et 2 bars, et de préférence comprise entre 0,5 et 1 bar. La pression de ligne minimale atteinte P_{ligmin} doit bien sûr rester supérieure à la pression P_{couple} permettant au premier récepteur E2 de transmettre l'intégralité du couple arrivant de la turbine. La pression minimale doit de préférence rester supérieure à une pression de déverrouillage, que l'on peut définir comme la pression de ligne la plus faible pour laquelle le ou les récepteurs qui doivent rester fermés pendant le changement de rapport, ne sont pas susceptibles de s'ouvrir du fait de la chute de pression de ligne. La pression de déverrouillage et la pression de ligne sont toutes deux fonction du couple transmis par la boîte avant le changement de rapport.

L'invention ne se résume pas à l'exemple de réalisation décrit, et peut se décliner en de nombreuses variantes. L'alimentation de chaque récepteur peut en partie gérée par le positionnement d'une vanne mécanique reliée au levier de vitesses, et qui autorise ou qui interdit certaines connexions de chacune des électrovannes de commande avec différents points du circuit hydraulique 2.

Les électrovannes de séquence 18, 19, 20, 21, 22 associées à chaque récepteur, pourraient être remplacées par des vannes de séquence pilotées de manière hydraulique par d'autres vannes, elles-mêmes pilotables à partir de l'unité de commande électronique 13.

L'électrovanne de modulation 3 pourrait être remplacée par une électrovanne proportionnelle, généralement plus onéreuse que les électrovannes de modulation. Cette solution resterait même cependant économique par rapport à certains systèmes existants où chaque récepteur est lui-même géré par une électrovanne proportionnelle.

L'accumulateur de pression 23, dont le remplissage est ici déclenché une fois que la montée en pression du premier récepteur E₂ a été autorisée, pourrait être autorisé à débuter son remplissage dès le début de l'ouverture de l'électrovanne de séquence 22. Il faudrait pour cela que l'accumulateur de pression ait une capacité suffisante pour n'atteindre sa phase de remplissage qu'une fois que la pression d'interface du récepteur E₂ a dépassé la pression P_{couple}.

La vidange du second récepteur E₁ pourrait être effectuée en gardant toujours un même orifice de vidange.

La forme de la courbe de consigne au moment de la chute de pression peut être différente de celle illustrée, notamment en ce qui concerne la courbe de remontée en pression, qui peut être adaptée de manière à ce que la reprise de couple se fasse de manière cohérente avec la courbe de décroissance du régime de rotation de la turbine du convertisseur de couple de la turbine du convertisseur de couple. La courbe de remontée en pression peut ainsi être imposée suivant une courbe paramétrée par exemple en fonction par exemple de la température d'huile de la boîte, de la vitesse de rotation de la turbine, et du couple transmis de la turbine vers l'engrenage épicycloïdal.

Le procédé pourrait être appliqué à d'autres changements de rapport qu'un changement de rapport de première en second vitesse. Le procédé pourrait être appliqué au pilotage de récepteurs hydrauliques d'un train épicycloïdal dans un système de réduction autre qu'une boîte de vitesses automobile.

Le procédé de pilotage de boîtes de vitesses automatique selon l'invention peut être adapté sur des boîtes de vitesses existantes, comprenant des électrovannes de séquences associées à chaque récepteur, et comprenant un circuit hydraulique dont la pression de ligne est pilotée par une électrovanne de modulation.

Ainsi, au moyen d'une simple adaptation logicielle, on peut améliorer le ressenti des changements de rapport au niveau des passagers tout en gardant une configuration physique existante de la boîte de vitesses.

## Revendications

1. Système hydraulique (1), notamment pour transmission automatique de véhicule automobile, comportant un premier et un deuxième récepteurs hydrauliques (E₂, E₁) de type embrayage et/ou freins, alimentés à la même pression de ligne (P_{ligne}) par un même circuit hydraulique (2), **caractérisé en ce que** le premier récepteur (E₂) est alimenté par une première vanne de séquence (22) et comporte un accumulateur de pression (23) connecté en aval de la première vanne de séquence (22) parallèlement au premier récepteur (E₂), le système comportant une unité de commande électronique (13) configurée pour provoquer une chute temporaire de la pression de ligne (P_{ligne}), pendant l'opération de fermeture (t₀-t₈) de l'un des récepteurs (E₂) lors d'un changement d'état du système, notamment lors d'un changement de rapport de démultiplication d'un premier rapport à un second rapport et pour déclencher un remplissage (t₂-t₈) de l'accumulateur (23) pendant l'opération de fermeture (t₀-t₈) du premier récepteur (E₂), de manière à distribuer le fluide issu de la première vanne de séquence (22) entre l'accumulateur de pression (23) et le premier récepteur (E₂), et à ralentir la montée en pression du premier récepteur (E₂).

2. Système hydraulique selon la revendication 1, dans lequel l'unité de commande électronique (13) est configurée pour amener la pression de ligne (P_{ligne}) d'une valeur nominale (P_{lignom}) appliquée avant le début du changement de rapport, à une valeur minimale (P_{ligmin}) atteinte pendant la phase de remplissage (t₂-t₈) de l'accumulateur de pression (23), puis pour ré-augmenter progressivement la pression de ligne jusqu'à ce que celle-ci atteigne à nouveau, avant la fin du remplissage (t₂-t₈) de l'accumulateur de pression(23), la valeur nominale (P_{lignom}).

3. Système hydraulique selon la revendication 2, dans lequel l'unité de commande (13) est configurée pour, pendant le changement de rapport, provoquer une vidange (t₂-t₉) d'un second récepteur (E₁) de manière à ouvrir le second récepteur (E₁), et est configurée pour provoquer une chute de pression de ligne (P_{ligne}), de la valeur nominale (P_{lignom}) vers la valeur minimale (P_{ligmin}), de manière à ce que le début de la chute de pression (t₃) ait lieu au plus tôt en même temps, et de préférence après, le début (t₂) de la vidange du second récepteur (E₁).

4. Système hydraulique selon les revendications 2 ou 3, dans lequel l'unité de commande (13) est configurée pour provoquer une chute de pression de ligne (P_{ligne}), de la valeur nominale (P_{lignom}) vers la valeur minimale (P_{ligmin}), de manière à ce que la valeur minimale (P_{ligmin}) de pression soit atteinte (t₃) au plus tard en même temps que le premier récepteur (E₂) commence à transmettre du couple (A).

5. Système hydraulique selon l'une des revendications 2 à 4, dans lequel l'unité de commande électronique (13) est configurée pour imposer un profil de remontée (t₃-t₆) de la pression de ligne (P_{ligne}) vers sa valeur nominale (P_{lignnom}) en fonction de variables comprenant notamment une vitesse de rotation d'une turbine de convertisseur de couple, un couple délivré par la turbine et une température d'huile du système hydraulique.

6. Système hydraulique selon l'une des revendications précédentes, comprenant une électrovanne de modulation (3) apte à provoquer la chute de pression de ligne (P_{ligne}) pendant le changement de rapport.

7. Système hydraulique selon l'une des revendications précédentes, comprenant en outre une quatrième vanne de séquence (17) pouvant être interposée entre le second récepteur (E₁) et une bâche (16), et pouvant se placer dans une première position permettant une première vitesse de vidange du récepteur par un premier orifice, et dans une seconde position permettant une seconde vitesse de vidange du récepteur plus lente que la première, par un second orifice de section plus réduite.

8. Procédé de gestion d'un système hydraulique, notamment d'un système hydraulique pour transmission automobile, comprenant au moins un premier (E₂) et un second (E₁) récepteurs hydrauliques alimentés en pression à partir d'une pression de ligne (P_{ligne}) d'un circuit hydraulique (2), chacun respectivement par une première vanne de séquence (22) et une seconde vanne de séquence(21), le premier récepteur hydraulique (E₂) comportant un accumulateur de pression (23) connecté en aval de la première vanne de séquence (22) parallèlement au premier récepteur (E₂), dans lequel, pendant la montée en pression du premier récepteur (E₂) au cours d'un changement de rapport de vitesses, on provoque une baisse temporaire (t₃-t₆) de la pression de ligne (P_{ligne}) et on déclenche un remplissage (t₂-t₈) de l'accumulateur (23) pendant l'opération de fermeture (t₀-t₈) du premier récepteur (E₂), de manière à distribuer le fluide issu de la première vanne de séquence (22) entre l'accumulateur de pression (23) et le premier récepteur (E₂), et à ralentir la montée en pression du premier récepteur (E₂).

9. Procédé selon la revendication 8, dans lequel on ouvre une vanne de séquence (22) apte à alimenter simultanément le premier récepteur (E2) et un accumulateur de pression (23), puis on autorise (t2-t8) le remplissage de l'accumulateur de pression (23) et on déclenche la vidange (t2-t9) du second récepteur (E1), puis on fait baisser la pression de ligne (Pligne), puis on ramène, avant la fin du remplissage (t2-t8) de l'accumulateur de pression (23), la pression de ligne sensiblement à sa valeur initiale (Plignom).

## Patentansprüche

1. Hydrauliksystem (1), insbesondere für ein Automatikgetriebe eines Kraftfahrzeugs, welches einen ersten und einen zweiten hydraulischen Verbraucher (E₂, E₁) vom Typ einer Kupplung und/oder von Bremsen aufweist, die mit demselben Leitungsdruck (P_{ligne}) von demselben Hydraulikkreis (2) gespeist werden, **dadurch gekennzeichnet, dass** der erste Verbraucher (E₂) von einem ersten Sequenzventil (22) gespeist wird und einen Druckspeicher (23) aufweist, der stromabwärts des ersten Sequenzventils (22) parallel zum ersten Verbraucher (E₂) angeschlossen ist, wobei das System eine elektronische Steuereinheit (13) aufweist, die dafür ausgelegt ist, einen zeitweiligen Abfall des Leitungsdrucks (P_{ligne}) während des Schließvorgangs (t₀-t₈) des einen der Verbraucher (E₂) bei einer Zustandsänderung des Systems hervorzurufen, insbesondere bei einer Änderung des Übersetzungsverhältnisses von einem ersten Gang zu einem zweiten Gang, und ein Füllen (t₂-t₈) des Druckspeichers (23) während des Schließvorgangs (t₀-t₈) des ersten Verbrauchers (E₂) auszulösen, um das vom ersten Sequenzventil (22) stammende Fluid zwischen dem Druckspeicher (23) und dem ersten Verbraucher (E₂) aufzuteilen und um den Druckanstieg des ersten Verbrauchers (E₂) zu verlangsamen.

2. Hydrauliksystem nach Anspruch 1, wobei die elektronische Steuereinheit (13) dafür ausgelegt ist, den Leitungsdruck (P_{ligne}) von einem Nennwert (P_{lignom}), der vor dem Beginn des Gangwechsels ausgeübt wird, auf einen minimalen Wert (P_{ligmin}) zu bringen, der während der Phase des Füllens (t₂-t₈) des Druckspeichers (23) erreicht wird, und anschließend den Leitungsdruck allmählich wieder zu erhöhen, bis dieser erneut, vor dem Ende des Füllens (t₂-t₈) des Druckspeichers (23), den Nennwert (P_{lignom}) erreicht.

3. Hydrauliksystem nach Anspruch 2, wobei die Steuereinheit (13) dafür ausgelegt ist, während des Gangwechsels eine Entleerung (t₂-t₉) eines zweiten Verbrauchers (E₁) hervorzurufen, um den zweiten Verbraucher (E₁) zu öffnen, und dafür ausgelegt ist, einen Abfall des Leitungsdrucks (P_{ligne}) vom Nennwert (P_{lignom}) auf den minimalen Wert (P_{ligmin}) hervorzurufen, so dass der Beginn des Druckabfalls (t₃) frühestens gleichzeitig mit und vorzugsweise nach dem Beginn (t₂) der Entleerung des zweiten Verbrauchers (E₁) stattfindet.

4. Hydrauliksystem nach den Ansprüchen 2 oder 3, wobei die Steuereinheit (13) dafür ausgelegt ist, einen Abfall des Leitungsdrucks (P_{ligne}) vom Nennwert (P_{lignom}) auf den minimalen Wert (P_{ligmin}) hervorzurufen, so dass der minimale Wert (P_{ligmin}) des Drucks spätestens zu derselben Zeit erreicht wird (t₃), zu der der erste Verbraucher (E₂) beginnt, Drehmoment (A) zu übertragen.

5. Hydrauliksystem nach einem der Ansprüche 2 bis 4, wobei die elektronische Steuereinheit (13) dafür ausgelegt ist, einen Verlauf des Wiederanstiegs (t₃-t₆) des Leitungsdrucks (P_{ligne}) auf seinen Nennwert (P_{lignom}) in Abhängigkeit von Variablen zu bewirken, welche insbesondere eine Drehzahl einer Drehmomentwandlerturbine, ein von der Turbine geliefertes Drehmoment und eine Öltemperatur des Hydrauliksystems umfassen.

6. Hydrauliksystem nach einem der vorhergehenden Ansprüche, welches ein Modulationsmagnetventil (3) umfasst, das in der Lage ist, den Abfall des Leitungsdrucks (P_{ligne}) während des Gangwechsels hervorzurufen.

7. Hydrauliksystem nach einem der vorhergehenden Ansprüche, welches außerdem ein viertes Sequenzventil (17) umfasst, das zwischen dem zweiten Verbraucher (E₁) und einem Sammelbehälter (16) angeordnet sein kann und in eine erste Position gelangen kann, die eine erste Entleerungsgeschwindigkeit des Verbrauchers über eine erste Öffnung ermöglicht, und in eine zweite Position, die eine zweite Entleerungsgeschwindigkeit des Verbrauchers, die langsamer als die erste ist, über eine zweite Öffnung mit kleinerem Querschnitt ermöglicht.

8. Verfahren zur Steuerung eines Hydrauliksystems, insbesondere eines Hydrauliksystems für ein Kraftfahrzeuggetriebe, welches wenigstens einen ersten (E₂) und einen zweiten (E₁) hydraulischen Verbraucher umfasst, die ausgehend von einem Leitungsdruck (P_{ligne}) eines Hydraulikkreises (2) jeweils über ein erstes Sequenzventil (22) bzw. ein zweites Sequenzventil (21) mit Druck versorgt werden, wobei der erste hydraulische Verbraucher (E₂) einen Druckspeicher (23) aufweist, der stromabwärts des ersten Sequenzventils (22) parallel zum ersten Verbraucher (E₂) angeschlossen ist, wobei während des Druckanstiegs des ersten Verbrauchers (E₂) während eines Gangwechsels eine zeitweilige Verringerung (t₃-t₆) des Leitungsdrucks (P_{ligne}) hervorgerufen wird und ein Füllen (t₂-t₈) des Druckspeichers (23) während des Schließvorgangs (t₀-t₈) des ersten Verbrauchers (E₂) ausgelöst wird, um das vom ersten Sequenzventil (22) stammende Fluid zwischen dem Druckspeicher (23) und dem ersten Verbraucher (E₂) aufzuteilen und um den Druckanstieg des ersten Verbrauchers (E₂) zu verlangsamen.

9. Verfahren nach Anspruch 8, wobei ein Sequenzventil (22) geöffnet wird, das in der Lage ist, gleichzeitig den ersten Verbraucher (E₂) und einen Druckspeicher (23) zu speisen, anschließend das Füllen des Druckspeichers (23) zugelassen wird (t₂-t₈) und die Entleerung (t₂₋t₉) des zweiten Verbrauchers (E₁) ausgelöst wird, anschließend eine Verringerung des Leitungsdrucks (P_{ligne}) bewirkt wird, anschließend, vor dem Ende des Füllens (t₂-t₈) des Druckspeichers (23), der Leitungsdruck im Wesentlichen wieder auf seinen anfänglichen Wert (P_{lignom}) gebracht wird.

## Claims

1. Hydraulic system (1), in particular for an automatic transmission of a motor vehicle, comprising a first and a second hydraulic receiver (E₂, E₁) of the clutch and/or brake type, supplied at the same line pressure (Pₗᵢₙₑ) by a same hydraulic circuit (2), **characterized in that** the first receiver (E₂) is supplied by a first sequence valve (22) and comprises a pressure accumulator (23) connected downstream of the first sequence valve (22) parallel to the first receiver (E₂), the system comprising an electronic control unit (13) configured to cause a temporary fall in the line pressure (Pₗᵢₙₑ) during the closing operation (t₀ - t₈) of one of the receivers (E₂) on a change of state of the system, in particular on a change of gear ratio from a first ratio to a second ratio and to initiate a filling (t₂ - t₈) of the accumulator (23) during the closing operation (t₀ - t₈) of the first receiver (E₂) so as to distribute the fluid from the first sequence valve (22) between the pressure accumulator (23) and the first receiver (E₂), and to slow down the pressure rise of the first receiver (E₂).

2. Hydraulic system according to Claim 1, wherein the electronic control unit (13) is configured to bring the line pressure (Pₗᵢₙₑ) from a nominal value (P_{lignom}), applied before the start of the ratio change, to a minimum value (P_{ligmin}) achieved during the filling phase (t₂ - t₈) of the pressure accumulator (23), then to progressively re-increase the line pressure until it again reaches the nominal value (P_{lignom}) before the end of the filling (t₂ - t₈) of the pressure accumulator (23) .

3. Hydraulic system according to Claim 2, wherein the control unit (13) is configured, during the ratio change, to cause a purge (t₂ - t₉) of a second receiver (E₁) so as to open the second receiver (E₁), and is configured to cause a fall in line pressure (Pₗᵢₙₑ) from the nominal value (P_{lignom}) to the minimum value (P_{ligmin}) such that the start of the pressure fall (t₃) takes place at the earliest at the same time as and preferably after the start (t₂) of the purging of the second receiver (E₁).

4. Hydraulic system according to Claim 2 or 3, wherein the control unit (13) is configured to cause a fall in line pressure (Pₗᵢₙₑ) from the nominal value (P_{lignom}) to the minimum value (P_{ligmin}) such that the minimum pressure value (P_{ligmin}) is reached (t₃) at the latest at the same time as the first receiver (E₂) begins to transmit torque (A).

5. Hydraulic system according to any of Caims 2 to 4, wherein the electronic control unit (13) is configured to impose a profile for re-increasing (t₃ - t₆) the line pressure (Pₗᵢₙₑ) to its nominal value (P_{lignom}) as a function of variables, comprising in particular a rotation speed of a turbine of a torque converter, a torque supplied by the turbine and an oil temperature of the hydraulic system.

6. Hydraulic system according to any of the preceding claims, comprising a modulation solenoid valve (3) able to cause the fall in line pressure (Pₗᵢₙₑ) during the ratio change.

7. Hydraulic system according to any of the preceding claims, also comprising a fourth sequence valve (17) which can be interposed between the second receiver (E₁) and the tank (16), and which is able to assume a first position allowing a first purge speed of the receiver via a first orifice, and a second position allowing a second purge speed of the receiver, slower than the first, via a second orifice of smaller section.

8. Method for managing a hydraulic system, in particular a hydraulic system for a motor vehicle transmission, comprising at least a first (E₂) and a second (E₁) hydraulic receiver which are supplied with pressure from a line pressure (Pₗᵢₙₑ) of a hydraulic circuit (2) each via a first sequence valve (22) and a second sequence valve (21) respectively, the first hydraulic receiver (E₂) comprising a pressure accumulator (23) connected downstream of the first sequence valve (22) parallel to the first receiver (E₂), wherein during the pressure rise of the first receiver (E₂) during a change in gear ratio, a temporary fall (t₃ - t₆) of the line pressure (Pₗᵢₙₑ) is caused and a filling (t₂ - t₈) of the accumulator (23) is initiated during the closing operation (t₀ - t₈) of the first receiver (E₂) so as to distribute the fluid from the first sequence valve (22) between the pressure accumulator (23) and the first receiver (E₂), and to slow down the pressure rise of the first receiver (E₂).

9. Method according to Claim 8, wherein a sequence valve (22) is opened which is able to supply the first receiver (E₂) and a pressure accumulator (23) simultaneously, then (t₂ - t₈) the filling of the pressure accumulator (23) is authorized and the purge (t₂ - t₉) of the second receiver (E₁) is initiated, then the line pressure (Pₗᵢₙₑ) is lowered, and then before the end of the filling (t₂ - t₈) of the pressure accumulator (23), the line pressure is returned substantially to its initial value (P_{lignom}).
